Europäisches Patentamt

European Patent Office

Office européen des brevets

(19)

(11) **EP 0 676 689 B1**

(12) **FASCICULE DE BREVET EUROPEEN**

(45) Date de publication et mention
de la délivrance du brevet:
**23.10.1996 Bulletin 1996/43**

(51) Int Cl.⁶: **G06F 5/06**

(21) Numéro de dépôt: **95400650.8**

(22) Date de dépôt: **23.03.1995**

(54) **Mémoire tampon à adressage modulo**

Modulo-adressierter Pufferspeicher

Modulo addressed buffer memory

(84) Etats contractants désignés:
**DE FR GB IT**

(30) Priorité: **31.03.1994 FR 9403861**

(43) Date de publication de la demande:
**11.10.1995 Bulletin 1995/41**

(73) Titulaire: **SGS-THOMSON MICROELECTRONICS S.A.**
**F-94250 Gentilly (FR)**

(72) Inventeur: **Riou, Marc, Cabinet Ballot Schmit**
**F-75116 Paris (FR)**

(74) Mandataire: **Schmit, Christian Norbert Marie**
**Cabinet Ballot-Schmit**
**7, rue Le Sueur**
**75116 Paris (FR)**

(56) Documents cités:
**EP-A- 0 438 991         WO-A-92/08186**
**US-A- 4 800 524**

**Description**

La présente invention concerne les circuits d'adressage utilisés pour commander l'accès aux emplacements mémoires à l'intérieur d'un dispositif mémoire, plus particulièrement les circuits d'adressage utilisés pour générer les adresses d'accès à des mémoires tampons circulaires.

Dans de nombreux circuits électroniques, il y a besoin d'accéder à, ou d'adresser, certains emplacements mémoires consécutifs périodiquement de façon cyclique. Ceci permet d'effectuer séquentiellement un nombre illimité d'opérations de lecture ou d'écriture, en utilisant seulement une faible partie de la mémoire disponible. Un emplacement mémoire est adressé, puis le suivant et ainsi de suite jusqu'à ce que l'extrémité d'une zone mémoire prédéfinie - la mémoire tampon - soit atteinte. L'adressage revient ensuite à l'emplacement situé à l'autre extrémité de la mémoire tampon. Typiquement, l'adressage commence à l'adresse disponible la plus basse et croît jusqu'à ce qu'une limite supérieure soit atteinte, puis l'accès mémoire revient à l'adresse disponible la plus basse par transition cyclique. Bien entendu, on pourrait également faire commencer l'adressage à l'adresse disponible la plus haute et le faire décroître jusqu'à ce qu'une limite inférieure soit atteinte, puis faire revenir l'accès mémoire à l'adresse disponible la plus haute par transition cyclique. Ceci est connu sous le nom d'adressage circulaire ou adressage modulo, et la mémoire tampon est connue sous le nom de mémoire tampon à adressage circulaire ou à adressage modulo.

Le calcul des adresses à utiliser pour accéder à des emplacements mémoires situés dans une telle mémoire tampon circulaire peut s'effectuer par un logiciel résidant dans un microprocesseur associé. Ces techniques logicielles demandent cependant plusieurs cycles machine pour effectuer le calcul et sont trop lentes pour certaines applications, telles que le filtrage numérique, le calcul matriciel, et de nombreuses autres routines de traitement numérique du signal. On préfère donc souvent les méthodes d'adressage réalisées de façon matérielle à cause de leur vitesse de fonctionnement. Un tel adressage modulo peut ainsi être réalisé de façon matérielle par un circuit tel que celui décrit dans la demande de brevet international PCT/US91/08102, numéro de publication WO 92/08186 de Analog Devices Inc.

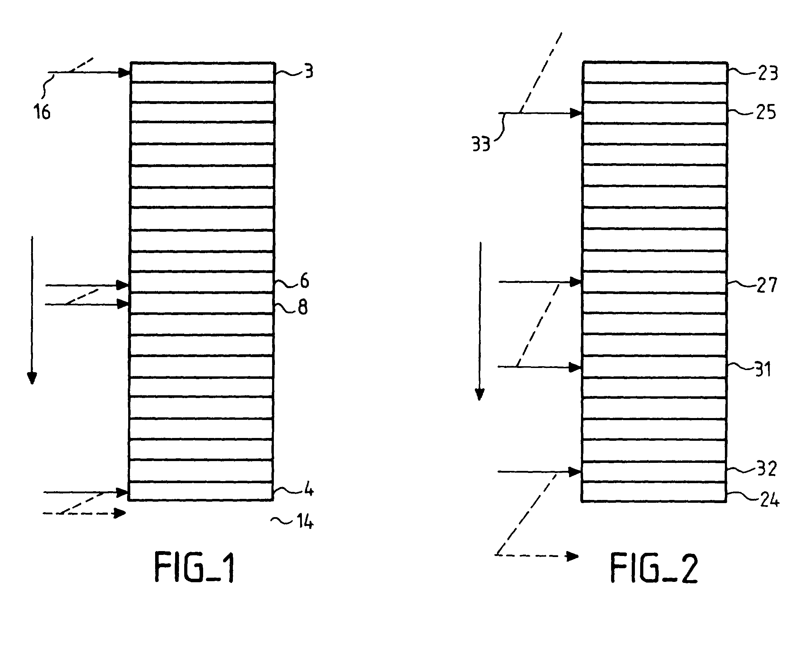

La Figure 1 de la présente demande représente l'organisation typique d'une mémoire tampon circulaire simple de la technique antérieure. Un ensemble d'emplacements mémoires sont dédiés à la mémoire tampon. Ces emplacements ont l'emplacement 3 comme emplacement le plus bas et l'emplacement 4 comme emplacement le plus haut. D'autres emplacements mémoire, par exemple 6, 8 sont situés à des emplacements d'adresses intermédiaires. L'adresse de l'emplacement mémoire 14 juste au-delà de la limite supérieure de la mémoire tampon est utilisée dans la procédure cyclique. Un circuit de commande permet l'accès aux emplacements mémoire de la mémoire tampon en générant et en fournissant l'adresse courante absolue de chaque emplacement mémoire à un registre pointeur. L'action de ce circuit de commande est représenté par le pointeur en déplacement 16.

Supposons que l'emplacement mémoire 6 est en train d'être lu, le pointeur 16 pointant sur cet emplacement. Une fois ceci effectué, le pointeur d'adresse 16 est incrémenté de un et l'emplacement mémoire 8 est pointé en lecture ou en écriture au cours du prochain cycle. Ceci se poursuit de façon identique jusqu'à ce que l'emplacement mémoire final 4 de la mémoire tampon soit lu. L'adresse fournie au pointeur 16 est incrémentée de un et devient l'adresse de l'emplacement mémoire 14, dépassant la limite supérieure de la mémoire tampon. Le circuit de commande détecte la présence de l'adresse de l'emplacement 14 dans le registre contenant l'adresse d'entrée du pointeur, le circuit de commande remet à zéro les contenus de ce registre et on pointe sur l'emplacement mémoire 3 ayant l'adresse la plus basse qui est le prochain emplacement auquel on accède. Dans cette mémoire tampon, on accède à chaque emplacement l'un après l'autre séquentiellement. Le circuit de commande détecte que l'on a atteint l'extrémité de la mémoire tampon quand l'adresse de l'emplacement mémoire 14 situé juste au delà de la limite supérieure de la mémoire tampon est fournie au pointeur.

Le circuit de commande d'une telle mémoire tampon peut être réalisé de telle sorte qu'un registre soit chargé avec M-1, où M est le nombre d'emplacements dans la mémoire tampon, et que le contenu de ce registre soit décrémenté à chaque cycle de lecture ou d'écriture, et que lorsque le contenu du registre atteint 0, le registre soit réinitialisé à la valeur M-1. Le contenu du registre est ajouté à l'adresse de l'emplacement le plus bas dans la mémoire tampon. Il n'y a aucune limitation sur la taille de la mémoire tampon, ni sur l'adresse de départ de la mémoire tampon. Elles peuvent être de taille quelconque. Cette mémoire tampon ne fonctionne pas si l'adresse est incrémentée par pas de deux emplacements mémoire ou plus, car on peut sauter l'emplacement mémoire 14.

La Figure 2 représente une autre mémoire tampon circulaire de la technique antérieure. Une telle mémoire tampon circulaire est par exemple décrite dans le document US-A- 4 800 524. Un ensemble d'emplacements mémoire est inclus dans la mémoire tampon. La mémoire tampon contient l'emplacement 23 comme emplacement d'adresse la plus basse et l'emplacement 24 comme emplacement d'adresse la plus haute. Les emplacements mémoire 25, 27, 31, 32 sont situés entre ces deux limites. Un circuit de commande permet l'accès aux emplacements mémoires de la mémoire tampon en générant et en fournissant l'adresse absolue de chaque emplacement mémoire. Ceci est représenté par un pointeur en déplacement 33.

Cette mémoire tampon autorise des accès mémoire avec des pas supérieurs à une unité. Dans ce cas, la mémoire tampon doit contenir un nombre d'emplacements mémoire qui soit une puissance entière de 2. Si la mémoire tampon

contient $2^n$ emplacements, l'adresse la plus basse 23 de la mémoire tampon doit en outre avoir tous ses n bits de poids le plus faible égaux à 0. L'adresse la plus haute de la mémoire tampon devra alors avoir tous ses n bits de poids le plus faible égaux à 1. Prenons comme exemple le cas où n=8, la mémoire tampon aura $2^8$=256 emplacements mémoire. Le pointeur pointe actuellement sur l'emplacement 27, qui peut avoir comme adresse de 12 bits 110010101000. Supposons que le circuit de commande de la mémoire tampon incrémente les adresses par pas de quatre. Le prochain emplacement sur lequel il pointera sera l'emplacement 31, d'adresse 110010101100. Ceci se poursuit jusqu'à ce que l'extrémité de la mémoire tampon soit presque atteinte. Après l'adressage de l'emplacement 32, avec - par exemple - l'adresse 110011111110, l'adresse est incrémentée de quatre à la valeur 110100000010. Ceci réside à l'extérieur de la mémoire tampon et est détecté par le circuit de commande par le changement du bit 8. Le bit 8 est alors remis à zéro et la nouvelle adresse est 110000000010, emplacement 25, près de l'extrémité d'adresse la plus basse de la mémoire tampon. Le circuit de commande pour cette mémoire tampon est beaucoup plus complexe que celui qui est nécessaire pour la mémoire tampon représenté dans la Figure 1. Le circuit le plus simple est celui obtenu quand la mémoire tampon est utilisée avec toutes les restrictions mentionnées précédemment; à savoir que la mémoire tampon doit avoir pour longueur $2^n$, et doit démarrer à un emplacement dont l'adresse est un entier multiple de $2^n$, de façon à avoir ses n bits de poids le plus faible égaux à 0. Mais c'est limitatif.

En utilisant un circuit supplémentaire, il est possible d'obtenir une mémoire tampon circulaire dont la longueur ne soit pas une puissance de deux. Par exemple, une mémoire tampon circulaire de 120 emplacements peut être obtenue en détectant un changement dans le 8ème bit de la sortie d'un additionneur connecté pour ajouter 8 à l'adresse du pointeur. Mais c'est plus compliqué.

Il est également demandé de pouvoir décrémenter l'adresse d'accès d'un nombre quelconque d'emplacements, et d'avoir une mémoire tampon de longueur quelconque, qui ne soit pas nécessairement un multiple de $2^n$.

Le fonctionnement demandé à une mémoire tampon circulaire est de détecter le franchissement de la limite d'adresse supérieure, et est de faire revenir le pointeur au nombre d'emplacements correct au dessus de la limite inférieure, ce nombre étant égal à la longueur du dépassement, au delà de l'adresse de la limite supérieure, dans le cas d'incréments positifs.

En utilisant les symboles Addr pour l'adresse courante, Nadr pour l'adresse suivante, Inc pour l'incrément, Ladd pour la limite d'adresse la plus basse et Hadd pour la limite d'adresse la plus haute, la prochaine adresse Nadr sera:

$$Addr + Inc,$$

à moins que ceci ne soit supérieur à Hadd, auquel cas la prochaine adresse doit être:

$$Nadr = Addr + Inc - Hadd + Ladd - 1.$$

Par exemple, pour une mémoire tampon ayant une limite d'adresse supérieure de 120, une limite d'adresse inférieure de 10, une adresse courante de 117 et un incrément de 4,

$$Nadr = 117 + 4 - 120 + 10 - 1 = 10.$$

Réciproquement, lorsqu'on utilise une incrémentation négative, le fonctionnement demandé à une mémoire tampon circulaire est de détecter le franchissement de la limite d'adresse inférieure, et de faire revenir le pointeur au nombre d'emplacements correct au dessous de la limite supérieure, ce nombre correct étant égal à la longueur du dépassement au dessous de l'adresse de la limite inférieure, dans le cas d'incréments négatifs.

En utilisant les mêmes symboles et le même exemple, mais avec un incrément de -4, la nouvelle adresse sera:

$$Addr + Inc,$$

où Inc est un entier avec signe. Si cette valeur est inférieure à la limite d'adresse inférieure, la prochaine adresse sera:

$$Nadr = Addr + Inc + Hadd - Ladd - 1.$$

En supposant que l'adresse courante soit 12, la prochaine adresse sera:

$$Nadr = 12 - 4 + 120 - 10 + 1 = 119.$$

La demande de brevet référencée ci-dessus tente de résoudre les problèmes résultant des limitations imposées par les mémoire tampons décrites précédemment en fournissant, pour effectuer ces opérations, quatre registres de N bits contenant: la première adresse limite dans la mémoire tampon; la prochaine adresse à laquelle accéder; la valeur de l'incrément et la longueur de la mémoire tampon. On peut remplacer soit le premier registre d'adresse limite, soit le registre de longueur, par un registre contenant une deuxième adresse limite de la mémoire tampon. L'incrémentation et le cycle d'adressage sont effectués de telle sorte que la mémoire tampon peut avoir une longueur quelconque et être située à n'importe quelle position dans la mémoire. Les contenus du registre d'incrément sont ajoutés aux contenus du registre d'adresse courante, et si cette somme dépasse la limite de la mémoire tampon, une adresse alternative est sélectionnée, l'adresse alternative étant décrite ci-dessus. Ce circuit présente cependant certains problèmes.

En premier lieu, le circuit est assez compliqué, mettant en jeu l'utilisation d'au moins quatre blocs de circuits différents, à savoir un multiplexeur, un additionneur, un additionneur/soustracteur et un comparateur. Ceci rend l'optimisation du circuit difficile pour obtenir une performance optimum dans tout procédé de fabrication, car chaque bloc doit être optimisé individuellement après quoi les effets d'un bloc sur ceux qui lui sont reliés doivent être examinés. Il est donc probable que le circuit fonctionne à une vitesse non optimum, et que toute modification dans le procédé de fabrication demanderait un effort d'optimisation considérable.

En second lieu, le circuit ne décide de l'adresse à utiliser parmi les deux adresses suivantes possibles que tout à fait à la fin du traitement. Deux adresses sont calculées, puis la première prochaine adresse temporaire est comparée à une adresse limite fixe ou à la longueur de la mémoire tampon pour déterminer quelle est la prochaine adresse temporaire à utiliser. L'utilisation d'un comparateur bit à bit introduit des retards à cause de la complexité d'un tel circuit, et le fait de l'inclure dans le chemin critique du calcul de la prochaine adresse signifie qu'un retard supplémentaire est introduit après que les deux adresses prochaines aient été calculées.

L'objet de la présente invention telle que revendiqué dans la revendication 1, est en contrepartie de fournir un circuit d'adressage de registre circulaire simple, rapide, réalisé en matériel, qui permette un adressage de type modulo d'une mémoire tampon de n'importe quelle taille, situé à n'importe quelle adresse dans la mémoire, et à l'intérieur duquel on peut incrémenter ou décrémenter le pointeur à chaque opération d'adressage de toute quantité jusqu'à concurrence de la taille de la mémoire tampon. En outre, l'invention vise à fournir un tel circuit avec un chemin critique réduit pour assurer le fonctionnement le plus rapide possible, avec un circuit simple pour faciliter l'optimisation du fonctionnement et pour faciliter l'adaptation aux procédés de fabrication. L'invention vise également à fournir un circuit dont on peut adapter facilement l'échelle à toute taille de mémoire tampon, et où on peut utiliser toute longueur d'adressage.

Des modes particuliers de réalisation de l'invention sont revendiqués dans les revendications dépendantes attenantes.

Plus particulièrement, selon l'invention, un circuit est décrit pour incrémenter l'adresse d'accès courante d'une mémoire tampon circulaire dans une mémoire électronique d'un incrément pour produire la prochaine adresse. Ce circuit comprend un circuit additionneur pour ajouter l'adresse courante à l'incrément et pour produire une première valeur temporaire de prochaine adresse et un circuit qui fait revenir la prochaine adresse à une adresse de base plus un dépassement, si l'adresse incrémentée dépasse une adresse limite d'un nombre égal au dépassement. Pour calculer la prochaine adresse, on fournit un circuit additionneur comprenant seulement trois additionneurs recevant l'adresse courante, l'incrément et l'adresse limite et produisant une première et une seconde valeurs temporaires de la prochaine adresse et la différence entre la première valeur temporaire de la prochaine adresse et l'adresse limite; et un circuit de sélection pour sélectionner comme prochaine adresse une des deux valeurs temporaires de la prochaine adresse, la sélection étant faite sur la polarité de la différence entre la première valeur temporaire de la prochaine adresse et l'adresse limite.

L'incrément peut être de sens positif ou négatif, sens qui doit être sélectionné pendant le fonctionnement du circuit. De même, la grandeur de l'incrément et les adresses limites de la mémoire tampon peuvent se choisir pendant que le circuit est en fonctionnement.

Un tel circuit peut avoir un premier additionneur qui ajoute l'adresse courante et l'incrément pour produire une première valeur temporaire de prochaine adresse et un second additionneur qui ajoute ou soustrait, selon le sens de l'incrément, la première valeur temporaire de prochaine adresse à l'adresse limite pour produire la valeur de la différence et un signal indiquant le dépassement de l'adresse limite par la première valeur temporaire d'adresse ; et un troisième additionneur qui ajoute ou soustrait, selon la polarité de l'incrément, la valeur de la différence et de l'adresse de base pour produire une seconde valeur temporaire de la prochaine adresse.

Les second et troisième additionneurs peuvent recevoir un signal d'entrée de type retenue indiquant la polarité de l'incrément.

Dans les réalisations possibles préférées, soit: une des entrées de chacun des additionneurs deux et trois est reliée à la sortie d'un premier et d'un second inverseur respectivement; soit une des entrées du second additionneur est reliée à la sortie du troisième inverseur.

En particulier, le circuit peut comprendre: un premier additionneur à deux entrées dont la sortie est connectée à une entrée d'un premier multiplexeur à deux entrées, et connecté ensuite à la première entrée d'un second additionneur à deux entrées; la sortie du second additionneur à deux entrées étant connectée à la première entrée d'un troisième additionneur à deux entrées; la sortie du troisième additionneur étant connectée à une seconde entrée du premier multiplexeur; la sortie du premier multiplexeur étant reliée à une première entrée du premier additionneur à deux entrées; comprenant en outre une liaison entre une sortie de retenue du second additionneur à deux entrées et une connexion de commande du premier multiplexeur.

Le circuit peut en outre comprendre un second et un troisième multiplexeurs dont les sorties sont connectées aux secondes entrées de second et du troisième multiplexeurs respectivement et dont la première entrée, seconde entrée et entrée de commande sont respectivement connectées ensemble.

Dans les réalisations possibles préférées, soit on insère un premier inverseur entre la sortie du premier additionneur et la première entrée du second additionneur et un second inverseur est inséré entre la sortie du second additionneur et la première entrée du troisième additionneur; soit un troisième inverseur est connecté entre la sortie du second multiplexeur et la seconde entrée du second additionneur.

Le circuit comprendra en outre de préférence une connexion entre l'entrée de commande du second multiplexeur et l'entrée de retenue du troisième additionneur dans la première réalisation; et une connexion entre l'entrée de commande du second multiplexeur et les entrées de retenues du second et du troisième additionneur dans la seconde réalisation.

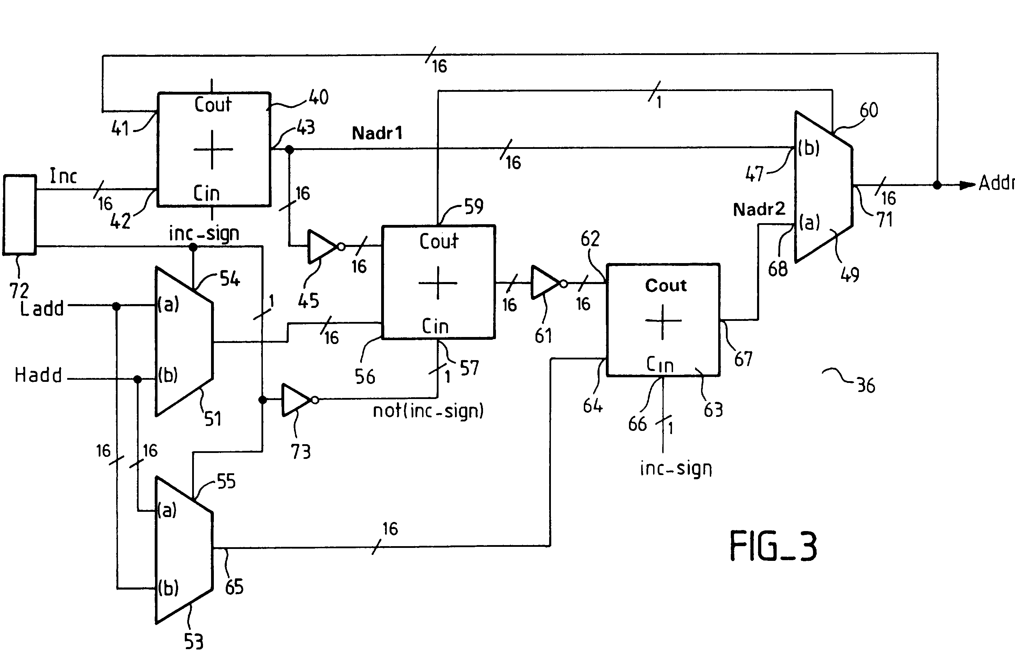

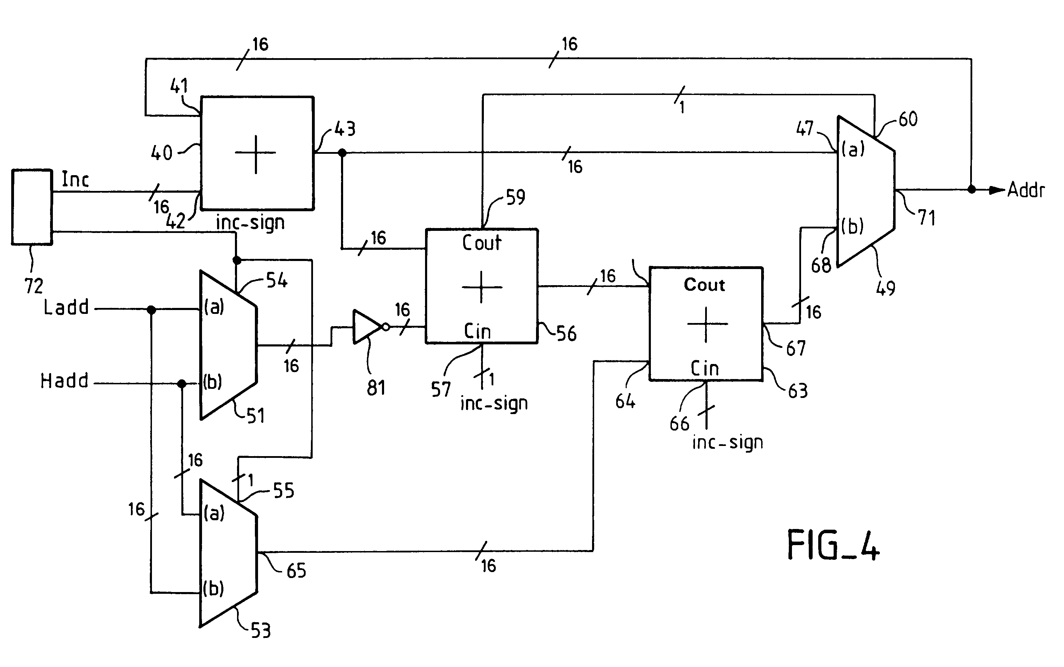

Les objets de la présente invention peuvent se réaliser comme décrit ci-dessous en référence aux réalisations spécifiques, en faisant référence aux Figures 3 et 4 des schémas ci-joints dans lesquels:

- La Figure 1, déjà décrite, représente schématiquement une mémoire tampon circulaire de l'art précédent;
- La Figure 2, déjà décrite, représente schématiquement une autre mémoire tampon circulaire de l'art précédent;
- La Figure 3 est un schéma bloc d'une réalisation d'un circuit de commande d'une mémoire tampon circulaire selon la présente invention;
- La Figure 4 est un schéma bloc d'une autre réalisation d'un circuit de commande d'une mémoire tampon selon la présente invention;

La Figure 3 représente un circuit d'incrémentation 36 selon une première réalisation de l'invention, qui peut commander l'incrémentation de l'adresse courante d'une mémoire tampon circulaire d'une mémoire électronique pour produire l'adresse suivante. Le circuit comprend: un circuit additionneur 40 pour ajouter l'adresse courante Addr à l'incrément Inc et produire une première valeur temporaire de la prochaine adresse Nadr1; un circuit 51, 56, 63 qui fait revenir la prochaine adresse à l'adresse de base Ladd/Hadd plus un dépassement quand l'adresse incrémentée dépasse une adresse limite Hadd/Ladd d'un nombre égal au dépassement. Dans le circuit 36, pour le calcul de la nouvelle adresse, on fournit un circuit additionneur comprenant trois additionneurs 40, 56, 63 recevant l'adresse courante Addr, l'incrément Inc et l'adresse limite Hadd/Ladd et produisant une première et une seconde valeurs temporaires de la prochaine adresse Nadr1, Nadr2 et la différence entre la première valeur Nadr1 temporaire de la prochaine adresse et l'adresse limite, le circuit d'incrémentation comprenant un circuit de sélection pour sélectionner comme prochaine adresse une des deux valeurs temporaires de prochaine adresse, la sélection se faisant selon le sens de la différence entre la première valeur temporaire de prochaine adresse et l'adresse limite. La plupart des circuits fonctionne sur des bus de données multilignes. Dans l'exemple courant, on suppose une longueur d'adresse de 16 bits. La longueur d'adresse pourrait cependant avoir un nombre quelconque de bits.

Le premier additionneur 40 a deux entrées 41, 42 et une sortie 43. La sortie 43 de cet additionneur 40 est connectée à une entrée d'un premier inverseur 45 et à une entrée (b) 47 d'un premier multiplexeur 49 à deux entrées. Un second multiplexeur 51 à deux entrées reçoit l'adresse la plus haute Hadd et l'adresse la plus basse Ladd de la mémoire tampon sur ses entrées (b) et (a) respectivement. Un troisième multiplexeur 53 à deux entrées reçoit l'adresse la plus basse Ladd et l'adresse la plus haute Hadd de la mémoire tampon sur ses entrées (b) et (a) respectivement. Les entrées de sélection 54, 55 des second et troisième multiplexeurs sont connectées ensemble et reçoivent un signal inc-sign. La sortie du premier inverseur 45 est connectée à la première entrée d'un deuxième additionneur à deux entrées 56. La sortie du second multiplexeur 51 est connectée à la seconde entrée du deuxième additionneur 56 dont l'entrée de retenue 57 reçoit par l'intermédiaire d'un inverseur 73 l'inverse du signal inc-sign, et dont la sortie de retenue 59 est connectée à une entrée de sélection 60 du premier multiplexeur 49. La sortie de l'additionneur 56 est connectée à une entrée d'un second inverseur 61, dont la sortie est connectée à une première entrée 62 d'un troisième additionneur à deux entrées 63. Cet additionneur 63 a une seconde entrée 64 qui est connectée à la sortie 65 du troisième multiplexeur 53, une entrée de retenue 66 qui reçoit le signal inc-sign, et une sortie 67 qui est connectée à l'entrée (a) 68 du premier multiplexeur 49. La sortie 71 du premier multiplexeur 49 est la sortie du circuit, elle est également connectée à la première entrée 41 du premier additionneur 40. Les signaux Inc et inc-sign sont fournis par un circuit 72 qui permet que la polarité de inc-sign et la grandeur de l'incrément Inc soient modifiées au cours du fonctionnement.

Chacun des additionneurs, multiplexeurs et inverseurs est composé d'un certain nombre, 16 dans ce cas, de circuits à un bit identiques, convenablement interconnectés.

Les multiplexeurs 49, 51, 53 transfèrent les données sur leur entrée (b) vers leur sortie quand les entrées sélection respectives sont maintenues à l'état LOW, et transfèrent les données présentes sur leur entrée (a) vers leur sortie quand les entrées sélection respectives sont maintenues à l'état HIGH.

Le signal inc-sign indique s'il est nécessaire d'incrémenter ou de décrémenter l'adresse courante. Il est à l'état LOW pour un incrément positif et à l'état HIGH pour un incrément négatif (décrément).

En prenant comme exemple le cas de l'incrément positif, le signal inc-sign sera à l'état LOW. Ce signal, appliqué sur les entrées sélection du second et du troisième multiplexeurs 51, 53, fait transférer les données sur les entrées (b) de chaque multiplexeur vers leurs sorties respectives. L'adresse maximum de mémoire tampon Hadd est ainsi fournie à la seconde entrée de l'additionneur 56, et l'adresse minimum de la mémoire tampon Ladd est fournie à la seconde entrée 64 de l'additionneur 63. L'entier Inc, avec signe, qui représente le pas nécessaire entre l'adresse courante Addr et la prochaine adresse Nadr est fourni par un circuit 72 de séparation, respectivement à la seconde entrée 42 du premier additionneur 40 et en entrée de sélection des multiplexeurs 51 et 53: Le circuit 72 sépare dans le signal d'incrément la valeur absolue du signe. L'adresse courante Addr est fournie à la première entrée 41. La sortie 43 fournit ensuite une première valeur temporaire de prochaine adresse Nadr1, qui est l'adresse courante Addr plus l'incrément Inc à l'entrée (b) 47 du premier multiplexeur 49. Ainsi,

$$Nadr1 = Addr + Inc.$$

Le second additionneur 56 reçoit sur sa première entrée l'inverse de la première valeur temporaire de prochaine adresse not(Nadr1) venant du premier inverseur 45, et l'adresse maximum Hadd de la mémoire tampon sur sa seconde entrée. L'entrée de retenue 57 du second additionneur 56 est maintenue HIGH par le signal not (inc-sign), et donc un bit de retenue est ajouté à la sortie. L'ajout de celui-ci équivaut à soustraire la première valeur temporaire de prochaine adresse Nadr1 de l'adresse maximum Hadd de la mémoire tampon:

$$not\ (Nadr1) + Hadd + 1 = (-\ Nadr1\ -1) + 1 + Hadd. = Hadd - Nadr1 - 1 + 1 = Hadd - Nadr1$$

En effet, en binaire arithmétique avec un nombre de bits fixe, $not(x) + 1 = -x$.

La sortie de ce second additionneur 56 est fournie au second inverseur 61 puis la sortie inversée du second additionneur est fournie à la première entrée 62 du troisième additionneur 63, dont la seconde entrée 64 reçoit l'adresse la plus basse Ladd de la mémoire tampon. Celles-ci sont ajoutées, sans bit de retenue, car son entrée 66 reçoit le signal inc-sign à l'état LOW. Le résultat disponible en sortie du troisième additionneur 63 est la seconde valeur temporaire d'adresse prochaine Nadr2 qui est fournie à l'entrée (a) du multiplexeur 49. Le résultat de cette addition est le suivant:

$$Nadr2 = not(Hadd - Nadr1) + Ladd;$$

$$Nadr2 = -(Hadd - Nadr1) - 1 + Ladd;$$

$$Nadr2 = -\ Hadd + Nadr1 - 1 + Ladd;$$

$$Nadr2 = Nadr1 - Hadd + Ladd - 1;$$

$$Nadr2 = Addr + Inc - Hadd + Ladd - 1.$$

Les deux prochaines adresses possibles sont maintenant fournies. La première valeur temporaire de prochaine adresse Nadr1 doit être utilisée quand l'incrément peut se faire sans dépasser la plus haute limite d'adresse de la mémoire tampon, la deuxième valeur temporaire de prochaine adresse étant utilisée quand l'incrément fait que la première valeur temporaire de prochaine adresse dépasse la limite d'adresse supérieure de la mémoire tampon.

Le choix de la valeur temporaire de prochaine adresse à utiliser est fait par l'entrée sélection 60 du premier multiplexeur 49. Il reçoit un signal de la sortie de retenue 59 du second additionneur 56. Si la première valeur temporaire de prochaine adresse Nadr1 est plus basse que l'adresse maximum de la mémoire tampon Hadd, cette sortie de retenue sera à l'état bas. Ceci fera que le premier multiplexeur 49 transfèrera les données disponibles sur son entrée (b), à savoir la première valeur temporaire de prochaine adresse Nadr1, vers sa sortie 71, à la fois vers le pointeur et vers le premier additionneur 40. Cependant, si la première valeur temporaire de prochaine adresse Nadr1 est supérieure à l'adresse maximum Hadd de la mémoire tampon, la sortie de retenue 59 sera à l'état HIGH, car un nombre négatif aura résulté de l'addition. Ceci fera que le premier multiplexeur 49 fournit les données présentes sur son entrée (a), à savoir la seconde valeur temporaire de prochaine adresse Nadr2, sur sa sortie vers le pointeur et vers le premier additionneur 40.

Ainsi, la spécification demandée est satisfaite, l'adresse retournant à la valeur limite inférieure plus le dépassement dès que la prochaine adresse transférée au pointeur dépasse la limite supérieure Hadd.

De même, dans le cas où des incréments négatifs sont utilisés, le signal inc-sign sera à l'état HIGH. Ce signal, appliqué sur les entrées sélection du second et du troisième multiplexeurs 51, 53, fait transférer les données sur les entrées (a) de chaque multiplexeur vers leurs sorties respectives. L'adresse minimum de mémoire tampon Ladd est ainsi fournie à la seconde entrée de l'additionneur 56, et l'adresse maximum de la mémoire tampon Hadd est fournie à la seconde entrée 64 de l'additionneur 63. L'entier avec signe Inc qui représente la transition nécessaire entre l'adresse courante Addr et la prochaine adresse Nadr est fourni à la seconde entrée 42 du premier additionneur 40. L'adresse courante Addr est fournie à la première entrée 41. La sortie 43 fournit ensuite une première valeur temporaire de prochaine adresse Nadrl, qui est l'adresse courante Addr plus l'incrément Inc à l'entrée (b) 47 du premier multiplexeur 49. Ainsi:

$$Nadr1 = Addr + Inc.$$

Le second additionneur 56 reçoit sur sa première entrée l'inverse de la première valeur temporaire de prochaine adresse not(Nadr1) venant du premier inverseur 45, et l'adresse minimum Ladd de la mémoire tampon sur sa seconde entrée. L'entrée de retenue 57 du second additionneur 56 est maintenue LOW par le signal not (inc-sign), et donc aucun bit de retenue n'est ajouté à la sortie. L'ajout de celui-ci équivaut à soustraire la première valeur temporaire de prochaine adresse Nadrl de l'adresse minimum Ladd de la mémoire tampon, moins 1:

$$not(Nadr1) + Ladd = (- Nadr1 - 1) + Ladd. = Ladd - Nadr1 - 1.$$

La sortie de ce second additionneur 56 est fournie au second inverseur 61 puis la sortie inversée du second additionneur est fournie à la première entrée 62 du troisième additionneur 63, dont la seconde entrée 64 reçoit l'adresse la plus haute Hadd de la mémoire tampon. Celles-ci sont ajoutées, avec un bit de retenue car son entrée 66 reçoit le signal inc-sign à l'état HIGH, et le résultat est la seconde valeur temporaire d'adresse prochaine Nadr2 qui est fournie à l'entrée (a) du multiplexeur 49. Le résultat de cette addition est le suivant:

$$Nadr2 = not(Ladd - Nadr1-1) + Hadd + 1;$$

$$Nadr2 = -Ladd + Nadr1 + 1 - 1 + Hadd + 1;$$

$$Nadr2 = Nadr1 - Ladd + Hadd + 1;$$

$$Nadr2 = Addr + Inc + Hadd - Ladd + 1.$$

Les deux prochaines adresses possibles sont maintenant fournies. La première valeur temporaire de prochaine adresse Nadrl doit être utilisée quand le décrément peut se faire sans dépasser la plus basse limite d'adresse de la mémoire tampon, la deuxième valeur temporaire de prochaine adresse étant utilisée quand le décrément fait que la première valeur temporaire de prochaine adresse dépasse la limite d'adresse inférieure de la mémoire tampon.

Le choix de la valeur temporaire de prochaine adresse à utiliser est fait par l'entrée sélection 60 du premier multiplexeur 49. Il reçoit un signal de la sortie de retenue 59 du second additionneur 56. Si la première valeur temporaire de prochaine adresse Nadrl est plus haute que l'adresse limite inférieure Ladd de la mémoire tampon, cette sortie de retenue sera à l'état bas. Ceci fera que le premier multiplexeur 49 transfèrera la première valeur temporaire de prochaine adresse Nadrl, présente sur son entrée (b), vers sa sortie, à la fois vers le pointeur et vers le premier additionneur 40. Cependant, si la première valeur temporaire de prochaine adresse Nadrl est inférieure à l'adresse minimum Ladd de la mémoire tampon, la sortie de retenue 59 sera à l'état HIGH, car un nombre négatif aura résulté de l'addition. Ceci fera que le premier multiplexeur 49 fournira la seconde valeur temporaire de prochaine adresse Nadr2, présente sur son entrée (a), vers le pointeur et vers le premier additionneur 40.

Ainsi, la spécification demandée est également satisfaite, l'adresse retournant à la valeur limite supérieure moins le dépassement dès que la prochaine adresse transférée au pointeur est plus basse que la limite inférieure Ladd.

Dans cette réalisation, la vitesse de fonctionnement peut être limitée par le délai de chemin critique. Le chemin critique est le chemin des données qui est le dernier à produire le résultat demandé pour fournir la prochaine adresse au pointeur. Dans le cas du circuit de la Figure 3, le chemin critique traverse le premier additionneur 40, le premier inverseur 45, le second additionneur 56, le second inverseur 61, le troisième additionneur 63 et le premier multiplexeur 49.

En révisant la dérivation de la sortie du troisième additionneur 63, on peut obtenir un circuit simplifié avec un chemin critique réduit. La sortie du troisième additionneur 63, dans le cas d'incrémentation positive, doit être :

$$Nadr2 = Nadr1 - Hadd + Ladd - 1$$

ce qui donne :

$$Nadr2 = Nadr1 + not\ (Hadd) + Ladd.$$

Dans le cas de l'incrémentation négative, cette sortie doit être:

$$Nadr2 = Nadr1 - Ladd + Hadd + 1$$

ce qui donne:

$$Nadr2 = Nadr1 + Hadd + not(Ladd) + 2.$$

La Figure 4 montre un circuit représentant ces équations, avec un autre circuit pour dériver la seconde valeur temporaire de prochaine adresse Nadr2. Ce circuit est sensiblement identique à celui de la Figure 3, et les fonctions identiques ont des étiquettes d'identification identiques. Le premier et le second inverseur 45, 61 sont enlevés, un troisième inverseur 81 est inséré entre la sortie du second multiplexeur 51 et la seconde entrée du second additionneur 56. Les entrée de retenues 57, 66 du second et du troisième additionneur 56, 63 respectivement sont connectées au signal inc-sign. Les entrées (a) et (b) vers le premier multiplexeur 49 sont inversées.

Dans le cas d'incrémentation positive, et si le signal inc-sign est LOW, le second additionneur 56 ajoute la première valeur temporaire de prochaine adresse Nadrl issu de la sortie 43 du premier additionneur 40 à l'inverse de l'adresse la plus haute de la mémoire tampon not(Hadd), le signal inc-sign à l'état LOW connecté sur l'entrée de retenue empêchant l'ajout d'un bit de retenue. La sortie de ce second additionneur est donc:

$$Nadr1 + not(Hadd) = Nadr1 - Hadd - 1.$$

Le troisième additionneur 63 ajoute le résultat de cette addition à l'adresse la plus basse Ladd de la mémoire tampon. Le signal inc-sign à l'état LOW sur l'entrée de retenue fait qu'aucun bit de retenue n'est ajouté, et la sortie du troisième additionneur 63 est alors:

$$Nadr2 = (Nadr1 - Hadd - 1) + Ladd;$$

$$Nadr2 = Nadr1 - Hadd + Ladd - 1,$$

identique au résultat correspondant au circuit de la Figure 3.

Dans le cas d'incrémentation négative, et si le signal inc-sign est HIGH, le second additionneur 56 ajoute la première valeur temporaire de prochaine adresse Nadr1 issue de la sortie 43 du premier additionneur 40 à l'inverse de l'adresse la plus basse de la mémoire tampon not(Ladd), le signal inc-sign à l'état HIGH connecté sur l'entrée de retenue ajoutant un en sortie. La sortie de ce second additionneur est donc:

$$Nadr1 + not(Ladd)+1;$$

$$Nadr1 - Ladd.$$

Le troisième additionneur 63 ajoute le résultat de cette addition à l'adresse la plus haute Hadd de la mémoire tampon. Le signal inc-sign à l'état HIGH sur l'entrée de retenue fait ajouter un bit de retenue, et la sortie du troisième additionneur 63 est alors:

$$Nadr2 = (Nadr1 - Ladd) + Hadd + 1;$$

$$Nadr2 = Nadr1 - Ladd + Hadd + 1,$$

identique au résultat correspondant au circuit de la Figure 3.

Cependant, dans ce cas, le fonctionnement du premier multiplexeur est changé. Si la première valeur temporaire d'adresse ne dépasse pas la limite d'adresse supérieure Hadd, le résultat de l'addition effectuée par le second inverseur est négatif, ce qui amène un signal de sortie de retenue 59 à l'état haut vers l'entrée de commande du multiplexeur 49. Si la première valeur temporaire d'adresse dépasse la limite supérieure d'adresse, le résultat de l'addition est positif, et la sortie de retenue 59 est à l'état bas. Ceci est à l'opposé de la situation décrite en se référant à la Figure 3. C'est pourquoi les entrées du troisième inverseur 49 sont inversées: la première valeur temporaire de prochaine adresse Nadrl est appliquée sur l'entrée (a), et la seconde valeur temporaire de prochaine adresse Nadr2 est appliquée à l'entrée (b).

Dans ce circuit, un inverseur en moins est nécessaire, et la longueur du chemin critique est réduite. L'entrée et la sortie de l'inverseur 81 sont réellement constantes, changeant uniquement lorsque le sens d'incrémentation change, qui est indiqué par un changement de signe du signal inc-sign, ou dans le cas où une des adresses limites Ladd, Hadd est modifiée pendant le fonctionnement du circuit. Le chemin critique est réduit de deux délais d'inverseurs. Ceci représente un gain de temps important, car l'utilisation de générateurs d'adresses de mémoire tampon développés avec des circuits est d'abord destinée à augmenter la vitesse de fonctionnement par rapport aux implémentations logicielles.

L'invention remplit donc ses objectifs de fournir un circuit d'adressage développé en matériel simple et rapide pour une mémoire tampon circulaire sans imposer de limitation sur les adresses de départ et d'arrivée, ni sur la taille de la mémoire tampon ou la taille ou le sens des incréments entre les adresses successives. Tous les paramètres utilisés - les adresses limites inférieure et supérieure, la taille et le sens de l'incrément- peuvent être changés à volonté pendant le fonctionnement du circuit. La vitesse de fonctionnement est optimisée par l'utilisation de blocs fonctionnels simples, par la suppression des inverseurs du chemin critique, par le fait de décider laquelle des deux valeurs temporaires de prochaine adresse sera utilisée avant que la valeur temporaire de prochaine adresse ait été calculée, et parce que la configuration en incrémentation positive ou négative s'effectue au moyen des deuxième et troisième multiplexeurs, ici encore à l'extérieur du chemin critique. Le circuit utilise seulement deux blocs fonctionnels de type différent - un additionneur à deux entrées et un multiplexeur à deux entrées plus un ensemble d'inverseurs. Ceci facilite l'optimisation du circuit car il est nécessaire de n'optimiser que deux blocs fonctionnels simples, ce qui permet d'atteindre la vitesse de fonctionnement la plus rapide et facilite l'adaptation du circuit à des modifications au cours de son processus de fabrication. L'expansion ou la réduction du circuit pour s'adapter à une longueur d'adressage quelconque est simple, par ajout ou suppression d'additionneurs élémentaires à un bit, de multiplexeurs et d'inverseurs en parallèle.

Comme l'on a décrit l'invention courante en se référant à deux réalisations spécifiques, de nombreuses autres réalisations sont possibles. Par exemple, l'utilisation d'adresses de longueurs différentes de 16, l'omission du second et du troisième multiplexeur si un seul sens d'incrémentation positif ou négatif est nécessaire; et l'intégration d'autres multiplexeurs pour permettre au circuit de commander deux mémoires tampons circulaires ou plus.

**Revendications**

1. Circuit d'incrémentation par un incrément (Inc) d'une adresse courante (Addr) d'une mémoire tampon circulaire dans une mémoire électronique, cette adresse courante étant comprise entre une adresse limite basse et une adresse limite haute (Ladd, Hadd), l'incrément (Inc) permettant de produire la prochaine adresse, ce circuit comprenant :

   - un circuit additionneur (40) pour ajouter l'adresse courante à l'incrément et pour produire une première valeur temporaire de prochaine adresse (Nadr1); caractérisé par
   - un circuit (45, 56, 61, 49) qui donne comme seconde valeur temporaire de prochaine adresse (Nadr2) une première adresse limite (Ladd) modifiée par un dépassement quand la première valeur temporaire de prochaine adresse (Nadr1) dépasse l'autre adresse limite (Hadd) d'un nombre égal audit dépassement, ce circuit comprenant
   - un second additionneur (56) qui reçoit la première valeur temporaire de prochaine adresse et une première adresse limite et produit une valeur (62) représentant la différence entre la première valeur temporaire de prochaine adresse et la première adresse limite, et
   - un troisième additionneur (63) qui reçoit la deuxième adresse limite et la valeur représentant la différence entre la première valeur temporaire de prochaine adresse et la première adresse limite et produit la seconde valeur temporaire de prochaine adresse,
   - un premier multiplexeur (49) recevant la première et la deuxième valeur temporaire d'adresse sur deux entrées, et
   - un circuit de sélection (59) connecté à une entrée de commande du premier multiplexeur et permettant de sélectionner comme prochaine adresse une des deux valeurs temporaires de prochaine adresse en fonction du dépassement de ladite autre adresse limite détecté par ledit second additionneur (56).

2. Circuit selon la revendication 1 dans lequel des moyens (72) sont fournis pour sélectionner le sens et l'amplitude de l'incrément, et les adresses limites pendant le fonctionnement du circuit.

3. Circuit selon la revendication 1 ou la revendication 2, caractérisé en ce que la sélection de la prochaine adresse s'effectue selon le sens de la valeur représentant la différence entre la première valeur temporaire de prochaine adresse et la première adresse limite.

4. Circuit selon l'une quelconque des revendications 1 à 3 caractérisé en ce que le second et le troisième additionneur reçoivent un signal sur une entrée de retenue en indiquant le sens de l'incrémentation.

5. Circuit selon l'une quelconque des revendications 1 à 4 caractérisé en ce que une des entrées du second additionneur est connectée à la sortie d'un inverseur.

6. Circuit selon l'une quelconque des revendications 1 à 4 caractérisé en ce qu'une des entrées du deuxième additionneur et une des entrées du troisième additionneur sont connectées à la sortie d'un premier et d'un second inverseur respectivement.

7. Circuit selon l'une des revendication 1 à 6 dans lequel un inverseur (45) est inséré entre la sortie (43) du premier additionneur (40) et la première entrée du second additionneur (56) et dans lequel un second inverseur (61) est inséré entre la sortie du second additionneur et la première entrée du troisième additionneur (63).

8. Circuit selon l'une des revendications 1 à 7 comprenant en outre un second (51) et un troisième (53) multiplexeur dont les sorties sont connectées aux secondes entrées du second (56) et du troisième (63) additionneur et dont les entrées première, seconde, et entrée de commande sont respectivement connectées ensemble.

9. Circuit selon l'une des revendications 7 ou 8 comprenant en outre un troisième inverseur (81) connecté entre la sortie du second multiplexeur et la seconde entrée du second additionneur.

10. Circuit selon la revendication 9 comprenant en outre une connexion entre l'entrée de commande (54) du second multiplexeur et l'entrée de retenue (66) du troisième additionneur (63).

11. Circuit selon la revendication 8 lorsqu'elle dépend de la revendication 7 comprenant en outre une connexion entre l'entrée de commande (54) du second multiplexeur (51) et les retenues d'entrée (57,66) du second et du troisième additionneur.

## Patentansprüche

1. Schaltkreis zur Inkrementierung mit einem Inkrement (Inc) einer laufenden Adresse (Addr) eines Pufferumlaufspeichers in einem elektronischen Speicher, wobei diese laufende Adresse sich zwischen einer unteren Grenzadresse und einer oberen Grenzadresse (Ladd, Hadd) befindet, wobei das Inkrement (Inc) es ermöglicht, die nächste Adresse zu bilden, welcher Schaltkreis umfaßt:

   - einen Additionsschaltkreis (40), um die laufende Adresse dem Inkrement hinzuzufügen und um einen ersten temporären Wert der nächsten Adresse (NadrI) zu erzeugen;

   **gekennzeichnet durch**

   - einen Schaltkreis (45, 56, 61, 49), der als zweiten temporären Wert der nächsten Adresse (Nadr2) eine erste Grenzadresse (Ladd) ausgibt, die beim Überschreiten, wenn der erste temporäre Wert der nächsten Adresse (NadrI) die andere Grenzadresse (Hadd) überschreitet, um eine der besagten Überschreitung gleiche Zahl modifiziert ist, wobei diese Schaltung umfaßt:
   - einen zweiten Addierer (56), der den ersten temporären Wert der nächsten Adresse und eine erste Grenzadresse einliest und einen Wert (62) erzeugt, der die Differenz zwischen dem ersten temporären Wert der nächsten Adresse und der ersten Grenzadresse angibt, und
   - einen dritten Addierer (63), der die zweite Grenzadresse und den Wert, der die Differenz zwischen dem ersten temporären Wert der nächsten Adresse und der ersten Grenzadresse darstellt, einliest, und der den zweiten temporären Wert der nächsten Adresse erzeugt,
   - einen ersten Multiplexer (49), der den ersten und zweiten temporären Wert der Adresse über zwei Eingänge einliest, und
   - einen Selektionsschaltkreis (59), der mit einem Befehlseingang des ersten Multiplexers verbunden ist und es erlaubt, als nächste Adresse einen der beiden temporären Werte der nächsten Adresse einzulesen, wobei die Funktion des Überschreitens der besagten anderen Grenzadresse durch den besagten zweiten Addierer (56) erkannt wird.

2. Schaltkreis nach Anspruch 1, in welchem Vorrichtungen (72) vorgesehen sind, um das Vorzeichen und die Größe des Inkrements sowie die Grenzadressen während des Betriebs des Schaltkreises auszuwählen.

3. Schaltkreis nach Anspruch 1 oder Anspruch 2, dadurch gekennzeichnet, daß die Auswahl der nächsten Adresse entsprechend dem Vorzeichen des Wertes erfolgt, der die Differenz zwischen dem ersten temporären Wert der nächsten Adresse und der ersten Grenzadresse darstellt.

4. Schaltkreis nach einem der Ansprüche 1 bis 3, dadurch gekennzeichnet, daß der zweite und dritte Addierer ein Signal über einen Übertragungseingang unter Angabe des Vorzeichens der Inkrementierung einlesen.

5. Schaltkreis nach einem der Ansprüche 1 bis 4, dadurch gekennzeichnet, daß einer der Eingänge des zweiten Addierers mit dem Ausgang eines Inverters verbunden ist.

6. Schaltkreis nach einem der Ansprüche 1 bis 4, dadurch gekennzeichnet, daß einer der Eingänge des zweiten Addierers und einer der Eingänge des dritten Addierers jeweils mit dem Ausgang eines ersten und eines zweiten Inverters verbunden sind.

7. Schaltkreis nach einem der Ansprüche 1 bis 6, in welchem ein Inverter (45) zwischen Ausgang (43) des ersten Addierers (40) und dem ersten Eingang des zweiten Addierers (56) eingesetzt ist, und in welchem ein zweiter Inverter (61) zwischen dem Ausgang des zweiten Addierers und dem ersten Eingang des dritten Addierers (63) eingesetzt ist.

8. Schaltkreis nach einem der Ansprüche 1 bis 7, der außerdem einen zweiten (51) und einen dritten (53) Multiplexer umfaßt, deren Ausgänge verbunden sind mit den zweiten Eingängen des zweiten (56) und des dritten (63) Addierers, und deren erster, zweiter Eingang und Befehlseingang jeweils zusammengeschaltet sind.

9. Schaltkreis nach einem der Ansprüche 7 oder 8, der unter anderem einen dritten Inverter (81) umfaßt, der zwischen den Ausgang des zweiten Multiplexers und dem zweiten Eingang des zweiten Addierers geschaltet ist.

10. Schaltkreis nach Anspruch 9, der außerdem eine Verbindung zwischen dem Befehlseingang (54) des zweiten Multiplexers und dem Übertragungseingang (66) des dritten Addierers (63) umfaßt.

11. Schaltkreis nach Anspruch 8, soweit sich dieser auf Anspruch 7 bezieht, der außerdem eine Verbindung zwischen dem Befehlseingang (54) des zweiten Multiplexers (51) und den Übertragungseingängen (57, 66) des zweiten und dritten Addierers umfaßt.

## Claims

1. A circuit for incrementing a current address (Addr) of a circular buffer in an electronic memory by an increment (Inc), the current address being comprised between a lower address limit and an upper address limit (Ladd, Hadd), the increment (Inc) allowing the next address to be produced, the circuit including:
   an adder circuit (40) for adding the current address to the increment and producing a first provisional next address (Nadr1);
   characterised in that it further includes:

   a circuit (45, 56, 61, 49) which supplies as a second provisional next address (Nadr2), a first address limit (Ladd) offset by an overshoot when the first provisional next address (Nadr1) passes the other address limit (Hadd) by a number equal to said overshoot, this circuit comprising
   a second adder (56) receiving the first provisional next address and a first address limit and producing a value (62) representing the difference between the first provisional next address and the first address limit, and
   a third adder (63) receiving the second address limit and the value representing the difference between the first provisional next address and the first address limit, and produces the second provisional next address,
   a first multiplexer (49) receiving the first and second provisional next addresses on two inputs, and
   a selection circuit (59) connected to a control input of the first multiplexer and allowing the selection of one of the two provisional next addresses as the next address according to the overshoot of the said other address limit, detected by the said second adder (56).

2. A circuit according to claim 1 wherein means (72) are provided for selection of the polarity and the magnitude of the increment, and the address limits while the circuit is in operation.

3. A circuit according to claim 1 or claim 2, characterised in that the selection of the next address is made according to the polarity of the value representing the difference between the first provisional next address and the first address limit.

4. A circuit according to any of claims 1 to 3 characterised in that the second and third adders receive a signal on a carry input indicating the polarity of the increment.

5. A circuit according to any of claims 1 to 4 characterised in that one of the inputs of the second adder is connected to the output of an inverter.

6. A circuit according to any of claims 1 to 4 characterised in that one of the inputs of the second adder and one of the inputs of the third adder are respectively connected to the output of a first and a second inverter.

7. A circuit according to any of claims 1 to 6, wherein an inverter (45) is inserted between the output (43) of the first adder (40) and the first input of the second adder (56) and wherein a second inverter (61) is inserted between the output of the second adder and the first input of the third adder (63).

8. A circuit according any of claims 1 to 7 which further includes a second (51) and a third (53) multiplexer whose outputs are connected to second inputs of the second (56) and third (63) adders and whose first, second and control inputs are respectively connected together.

9. A circuit according to claim 7 or claim 8 which further includes a third inverter (81) connected between the output of the second multiplexer and the second input of the second adder.

10. A circuit according to claim 9 which further includes a connection between the control input (54) of the second multiplexer and a carry in input (66) of the third adder (63).

11. A circuit according to claim 8 when dependant on claim 7 which further includes a connection between the control input (54) of the second multiplexer (51) and carry in inputs (57, 66) of the second and the third adders.

EP 0 676 689 B1

FIG_1

FIG_2

FIG_3

FIG_4

EP 0 676 689 B1